# EUROPÄISCHE PATENTSCHRIFT

(11) **EP 1 167 436 B1**
(45) Veröffentlichungstag und Bekanntmachung des Hinweises auf die Patenterteilung: **26.05.2004**
(21) Anmeldenummer: 01102010.4
(22) Anmeldetag: 30.01.2001
(51) Int. Cl.: C08L 23/00, C08L 23/26, C08L 83/00

(54) **Trennbare Schicht, Schichtstoff und Verfahren zu seiner Herstellung**
Disconnectable film, layered product and process for its preparation
Couche débrochable, produit laminé et procédé pour sa préparation

(30) Priorität: 30.06.2000 DE 10031909
(43) Veröffentlichungstag der Anmeldung: 02.01.2002
(73) Patentinhaber: Frantschach Inncoat GmbH, 83064 Raubling (DE); RITRAMA SPA, 20052 Monza (Milano) (IT)
(72) Erfinder: Ferraris, Giuseppe, 15033 Casale Monferrato-AL (IT); Ludwig, Peter, 83064 Raubling (DE); Munninger, Wilhelm, Dr., 83115 Neubeuern (DE); Rink, Tomas Federico, 20043 Arcore (IT); Tschenet, Werner, 83064 Raubling (DE)
(74) Vertreter: Meyer-Roedern, Giso, Dr.

(56) Entgegenhaltungen:
- EP-A- 1 013 681
- DE-A- 19 548 173
- DE-T- 69 420 560
- US-A- 5 585 420
- US-A- 5 851 640
- Dr. Bulian G.: Beschichten und Kaschieren mit Extrusionstechnik; 22. Münchener Klebstoff- und Veredelungsseminar; 1997; Seiten 12 bis 14

## Beschreibung

Die Erfindung betrifft eine durch Extrusionskaschieren hergestellte trennbare Schicht Kaschiermittel, einen Schichtstoff und ein Verfahren zu seiner Herstellung.

Trennbare Schichten Extrusionskaschiermittel dienen dazu, Karten wie beispielsweise Scheckkarten, Kreditkarten, Club-Mitgliedskarten, Chipkarten an einem Träger zu befestigen, der aus Papier, Pappe oder Kunststoff besteht. Ein weiteres Anwendungsgebiet für eine trennbare Schicht Extrusionskaschiermittel ist das Kaschieren einer Cling-Vinyl-Folie auf einen Träger. Die Bezeichnung "Cling-Vinyl-Folie" steht für eine kleberfreie, innerlich weichgemachte und dadurch selbsthaftende Folie, die bedruckt für Werbezwecke z. B. an LKW-Flächen angebracht wird.

Zur begrifflichen Vereinfachung sei das Objekt, das mit einer trennbaren Schicht Extrusionskaschiermittel an einem Träger zu befestigen ist, im folgenden als Informationsträger bezeichnet. An die trennbare Schicht Extrusionskaschiermittel werden folgende Anforderungen gestellt:

Das Extrusionskaschiermittel muß eine dauerhafte Verbundhaftung zwischen Informationsträger und Träger herstellen, die die Weiterverarbeitung und Distribution sicher übersteht und unempfindlich gegen Klimaschwankungen und alterungsbeständig ist.

Der Informationsträger muß sich einfach, bequem und garantiert beschädigungsfrei von dem Träger lösen lassen. Es dürfen keine Kleberrückstände an dem Informationsträger verbleiben.

Die Oberfläche des Trägers darf nach dem Ablösen des Informationsträgers nicht mehr klebrig sein. Der Träger wird häufig in eine Akte abgeheftet und darf diese nicht verkleben.

Einschlägige trennbare Klebstoffe werden in der Literatur als Schälleime bezeichnet. Es handelt sich dabei um Haftkleber mit geringer Oberflächenklebrigkeit, speziell Polyacrylat-Lösungen oder -Dispersionen, die teilweise vernetzt sein können, und Schmelzhaftkleber, die gegen den zumeist aus Papier bestehenden Träger fest verkleben und sich von der relativ spaltfesten Rückseite des Informationsträgers abschälen lassen. Die bekannten Klebstoffe erfüllen das genannte Anforderungsprofil nicht immer zur vollen Zufriedenheit.

Aufgabe der Erfindung ist es, eine dahingehend bessere trennbare Schicht Extrusionskaschiermittel zu schaffen.

Die Lösung dieser Aufgabe ist in einer durch Extrusionskaschieren hergestellten trennbaren Schicht Kaschiermittel zu sehen, die aus einer Mischung von mit Polydimethylsiloxan (PDMS) modifiziertem Polyethylen und beim Extrudieren als Schmelzfilm klebefähigem Polyolefin besteht, wobei der Polydimethylsiloxananteil des Polyethylens 0,1 bis 3 Gew. % beträgt.

Herkömmliche Kaschiermittel zum Extrusionskaschieren sind als Schmelzfilm beim Auftreffen auf das Substrat klebrig. Sie schaffen normalerweise eine permanente Klebeverbindung und sind nach dem Abkühlen ohne jede Oberflächenklebrigkeit.

Die Besonderheit der Erfindung ist die Herstellung einer trennbaren Schicht Kaschiermittel durch Extrusionskaschieren, wobei Extrusionspolymere mit einander widersprechenden Eigenschaften - trennfähiges, mit Polydimethylsiloxan modifiziertes Polyethylen einerseits; beim Extrudieren klebefähiges Polyolefin andererseits - in definierten Mischungen eingesetzt werden. Das ursprünglich als Trennmedium konzipierte, mit Polydimethylsiloxan modifizierte Polyethylen wird damit erstmals zum Kaschieren verwendet und dazu in einem spezifischen Verhältnis mit beim Extrudieren klebefähigem Polyolefin gemischt.

Aus der US 5 851 640 A ist ein biaxial verstreckter Polypropylenfilm bekannt, der durch Coextrusion hergestellt wird und einen mehrschichtigen Aufbau hat. Im einfachsten Fall ist eine Kernschicht, eine Zwischenschicht und eine Deckschicht vorhanden. Die sehr dünne Deckschicht enthält ausdrücklich kein Silikondioxid oder Polydimethylsiloxan. Nur wenn eine zweite, dickere Deckschicht vorhanden ist, kann diese Polydimethylsiloxan und Silikondioxid enthalten.

Die Hauptkomponente der Kernschicht und der Zwischenschicht ist Polypropylen. Polyethylen kommt überhaupt nur über Polymermischungen in die Schichten hinein.

Ein Polydimethylsiloxanzusatz kommt für die Kernschicht, Zwischenschicht und Deckschicht in Betracht, und zwar als Gleitmittel. Außerdem ist ein Zusatz von Polydiorganosiloxanen als Antistatikum erwähnt.

Ein möglicher Füllstoff für die Kernschicht und Zwischenschicht ist Titandioxid. Polydiorganosiloxane und Polyorganohydridosiloxane sind als Bestandteil einer Beschichtung der Titandioxidpartikel erwähnt.

Der Polypropylenfilm der US 5 851 640 A ist siegelfähig.

Die US 5 585 420 A betrifft eine Komposition für den Guß kratzfester Kunststoffartikel. Die Komposition hat einen Hauptanteil Polypropylen und eine geringeren Anteil LD-Polyethylen. Sie enthält anorganische Füllstoffe und einen geringen Anteil Polyorganosiloxan, das die Kratzfestigkeit insofern verbessert, als das Kratzmedium leichter abgleitet.

Aus der EP 1 013 681 A1 ist ein Organopolysiloxan-modifiziertes Propfcopolymer auf der Basis von Polyethylen bekannt. Das Copolymer hat Anwendungen unter anderem für druckempfindliche Kleber und Haftkleber.

Der Artikel Dr. G. Bulian, "Beschichten und Kaschieren mit Extrusionstechnik", 22. Münchener Klebstoff- und Veredelungsseminar, 1997, Seiten 12 bis 14 betrifft das Extrusionsbeschichten und -kaschieren vorzugsweise mit Polyethylen.

Aus der DE 694 20 560 T2 sind Siloxan-modifizierte Polyolefin-Copolymere mit Anwendung unter anderem als Klebstoff-Release-Materialien bekannt. Die Copolymere werden in Form von dünnen extrudierten oder coextrudierten Schichten oder Folien verarbeitet. Sie können mit anderen Polymeren gemischt und zu mehrschichtigen Strukturen coextrudiert werden.

Die DE 195 48 173 A1 betrifft einen Schichtstoff und ein Verfahren zu seiner Herstellung durch Mono- oder Coextrusionskaschieren unter anderem mit Polyethylen.

Bei einer bevorzugten Ausführungsform ist das modifizierte Polyethylen LD-Polyethylen (Low Density Polyethylene; Polyethylen geringer Dichte).

Bei einer bevorzugten Ausführungsform ist das Polyethylen mit dem Polydimethylsiloxan gepfropft. Ein mögliches Material ist das Polydimethylsiloxan-gepropfte LD-Polyethylen LUBOTENE RLF-4003 der Optatech Corporation.

Das Polyethylen kann auch mit dem Polydimethylsiloxan gemischt sein.

Die erfindungsgemäße trennbare Schicht Kaschiermittel kann sowohl monoextrudiert, als auch mit Polyolefin, vorzugsweise LD-Polyethylen, coextrudiert sein.

Gegenstand der Erfindung ist auch ein Schichtstoff mit einer Trägerschicht und einer Deckschicht, die mit einer dazwischen extrudierten Schicht Kaschiermittel der genannten Art zusammenkaschiert sind.

Eine monoextrudierte Schicht Kaschiermittel ist homogen. Ihre Haftung an der Trägerschicht und Deckschicht hängt von der Materialwahl dafür ab.

Sinnvollerweise betrachte man die Trägerschicht als die Oberschicht des Trägers, an dem der Informationsträger lösbar befestigt werden soll, und die Deckschicht als die Unterschicht des Informationsträgers. Die Trägerschicht besteht vorzugsweise aus Papier, und die Deckschicht vorzugsweise aus oberflächenspaltfestem Spezialpapier oder mit Kunststoff beschichtetem Papier oder Kunststoff-Folie. Das erfindungsgemäße Kaschiermittel hat erheblich stärkere Haftung an der Trägerschicht als an der Deckschicht.

Die monoextrudierte Schicht Kaschiermittel hat vorzugsweise eine Dicke von 10 bis 40 µm.

Eine Coextrusion der erfindungsgemäßen Schicht Kaschiermittel empfiehlt sich bei kritischen Trägerschichten wie z. B. hoch verdichteten, glatten Papieren, mit Kunststoff beschichteten Papieren oder Kunststoff-Folien. Das Coextrudat besteht aus einer dicken Grundschicht aus Polyolefin, insbesondere LD-Polyethylen, die der Trägerschicht zugewandt ist, und aus einer dünnen Schicht erfindungsgemäßen Extrusionskaschiermittels, die der Deckschicht zugewandt ist. Dieser Schichtaufbau des Coextrudats erlaubt es, die Haftung an Trägerschicht und Deckschicht differenziert einzustellen und genau zu kontrollieren. Die Verbundhaftung ist dauerhaft beständig.

Fertigungstechnische Vorteile sind bei der Coextrusion durch die Möglichkeit einer unterschiedlichen Temperaturführung der beiden Schmelzen gegeben. Die Temperatur der LD-Polyethylenschmelze beträgt vorzugsweise ca. 280 °C, und die Temperatur der Kaschiermittelschmelze vorzugsweise ca. 220 °C oder weniger.

Mit der Coextrusion lassen sich Materialkosten sparen. LD-Polyethylen ist erheblich kostengünstiger als das erfindungsgemäße, aus mit Polydimethylsiloxan modifiziertem Polyethylen und klebefähigem Polyolefin bestehende Extrusionskaschiermittel.

Gegenüber der herkömmlichen Kaschierweise mit Klebstoff-Lösungen oder -Dispersionen ist die Extrusionskaschierung (Mono- oder Co-Extrusion) mit dem erfindungsgemäßen Kaschiermittel kostengünstiger.

LD-PE- und Polydimethylsiloxan-modifizierte LD-PE-Granulate sind erheblich billiger und einfacher zu distributieren und zu verarbeiten.

Bei der Extrusionskaschierung kann man mit breiteren Materialbahnen und höheren Maschinenlaufgeschwindigkeiten arbeiten.

Die Extrusionskaschierung ist umweltfreundlich. Es bedarf keiner Lösungsmittel und Dispersionen, so daß sich die umweltrelevanten Probleme beim Abtrocknen / Verdunsten von organischen Lösungsmitteln sowie der Entsorgung von Klebstoffresten und Waschflüssigkeiten nicht stellen.

Die Grundschicht Polyolefin hat bei dem Coextrudat vorzugsweise eine Dicke von 10 bis 30 µm. Die Dicke der Schicht Extrusionskaschiermittel beträgt vorzugsweise 1 bis 10 µm.

Der Polydimethylsiloxananteil des Polyethylens liegt bei dem erfindungsgemäßen Extrusionskaschiermittel zwischen 0,1 und 3 Gew.%. Wenn die Deckschicht aus unpolarer Kunststoff-Folie, insbesondere Polyolefin, besteht, tendiert der Polydimethylsiloxananteil wegen der geringen chemischen Affinität der Folienoberfläche gegen 0,1 Gew.%. Wenn die Deckschicht aus polarer Kunststoff-Folie, insbesondere Polyvinylchlorid (PVC), Polyethylenterephthalat (PET), Polycarbonat (PC), Polystyrol (PS) besteht, tendiert der Polydimethlysiloxananteil wegen der höheren chemischen Affinität der Folienoberfläche und der starken chemischen Bindungskräfte gegen 3 Gew.%. Das Mischungsverhältnis ist dem Material und der Oberflächenbeschaffenheit (glatt / rauh, glänzend / matt) der Deckschicht und der Stärke der gewünschten Haftung unter Berücksichtigung der jeweiligen Extrusionsbedingungen anzupassen.

Bei einer bevorzugten Ausführungsform ist die Trägerschicht und/oder Deckschicht des erfindungsgemäßen Schichtstoffs außen mit einer Schicht Selbsthaftkleber belegt und die Schicht Selbsthaftkleber mit einem silikonisierten Trennmaterial abgedeckt.

Ein Verfahren zur Herstellung des erfindungsgemäßen Schichtstoffs besteht darin, daß man Bahnen Trägermaterial und Deckmaterial von je einem Coil abwickelt, an einem Kühlzylinder mit Anpreßwalze zusammenführt, das Kaschiermittel dazwischen extrudiert und nach Umlaufen eines Teils des Kühlzylinderumfangs den Schichtstoff davon wegführt und auf einen Coil aufwickelt.

Man kann sowohl eine Breitschlitz-Monoextrusion des Kaschiermittels, als auch eine Breitschlitz-Coextrusion des Kaschiermittels zusammen mit Polyolefin, vorzugsweise LD-Polyethylen, durchführen.

Die Erfindung wird im folgenden anhand von in der Zeichnung dargestellten Ausführungsbeispielen näher erläutert. Es zeigen:
- Fig. 1: das Schema einer Anlage zur Herstellung eines Schichtstoffs;
- Fig. 2: schematisch und nicht maßstabsgetreu den Aufbau eines Schichtstoffs mit einer monoextrudierten Schicht Kaschiermittel;
- Fig. 3: schematisch und nicht maßstabsgetreu den Aufbau eines Schichtstoffs mit einer coextrudierten Schicht Kaschiermittel; und
- Fig. 4 bis Fig. 6: schematisch und nicht maßstabsgetreu den Aufbau des weiterverarbeiteten Schichtstoffs in drei Varianten.

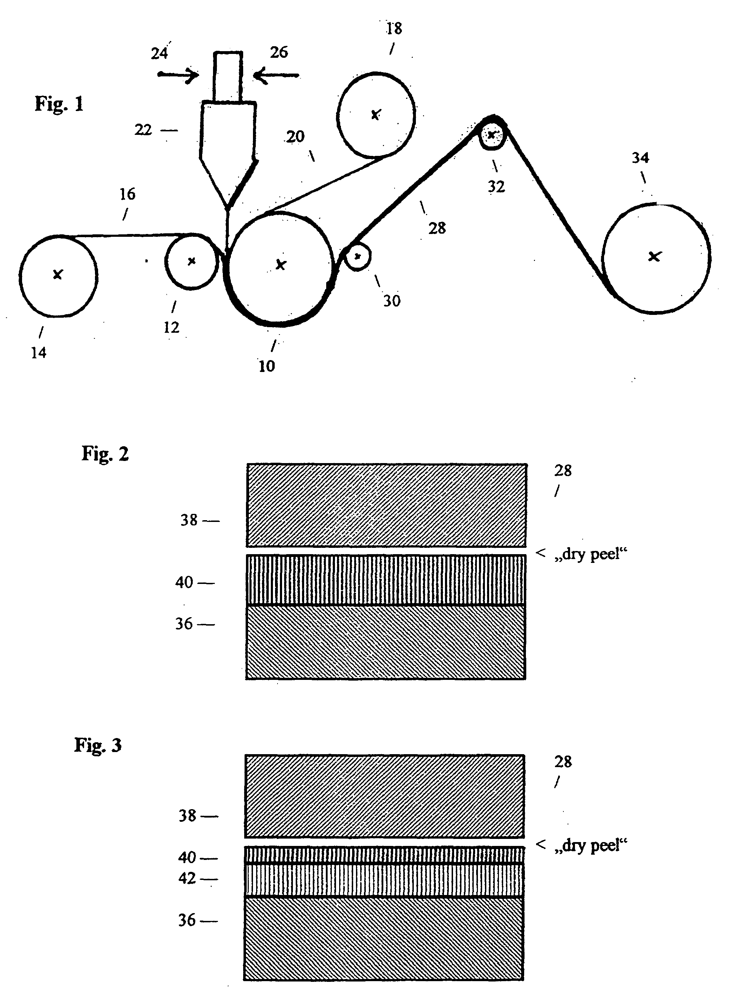

Fig. 1 zeigt einen Laminator mit einem Kühlzylinder 10 und einer Anpreßwalze 12. Von einem erste Coil 14 wird eine Bahn Trägermaterial 16 abgewickelt. Von einem zweiten Coil 18 wird eine Bahn Deckmaterial 20 abgewickelt. Die Bahnen 16, 20 werden an dem Spalt zwischen dem Kühlzylinder 10 und der Anpreßwalze 12 zusammengeführt und durch Breitschlitz-Coextrusion zusammenkaschiert.

Dem Coextruder 22 wird auf der der Trägerschicht 16 zugewandten Seite LD-Polyethylen 24, und auf der der Deckschicht 20 zugewandten Seite eine Mischung 26 von LD-Polyethylen und mit Polydimethylsiloxan gepfropftem LD-Polyethylen zugeführt.

Nach Umlaufen etwa des halben Umfangs des Kühlzylinders 10 wird das Laminat 28 über Walzen 30, 32 davon weggeführt und auf einen Coil 34 aufgewickelt.

Fig. 2 zeigt ein Laminat 28 mit einer Trägerschicht 36, einer Deckschicht 38 und einer dazwischen monoextrudierten Schicht Kaschiermittel 40, das aus einer Mischung 26 von LD-Polyethylen und mit Polydimethylsiloxan modifiziertem LD-Polyethylen besteht.

Fig. 3 zeigt ein Laminat 28 mit einer Trägerschicht 36, einer Deckschicht 38 und einer dazwischen coextrudierten Schicht Kaschiermittel, die aus einer der Trägerschicht 36 zugewandten, relativ dicken Grundschicht 42 LD-Polyethylen und einer der Deckschicht 38 zugewandten, relativ dünnen Schicht Extrusionskaschiermittel 40 aufgebaut ist, das aus einer Mischung 26 von LD-Polyethylen und mit Polydimethylsiloxan modifiziertem LD-Polyethylen besteht.

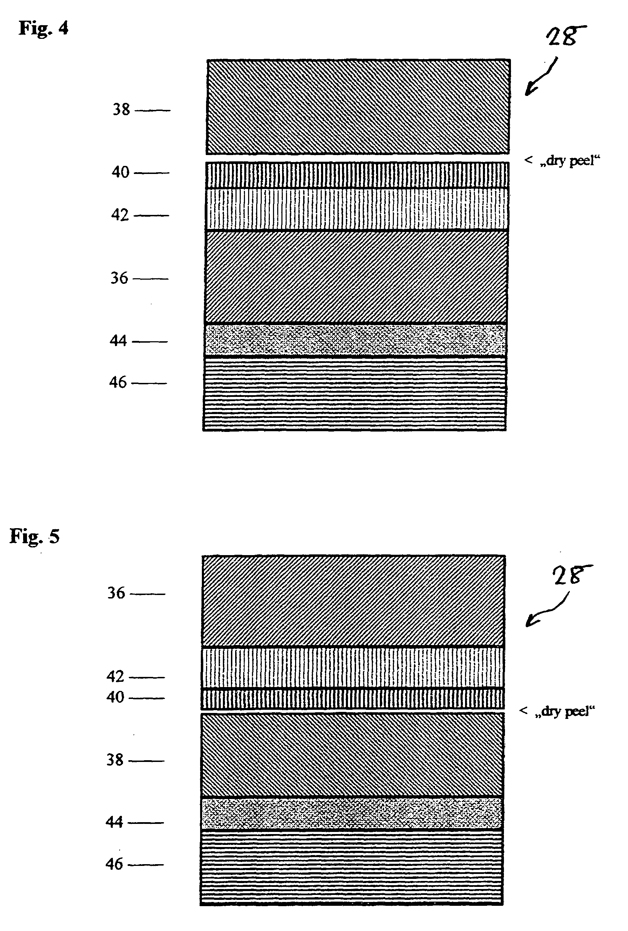

Fig. 4 zeigt ein Laminat 28 derselben Art, bei dem die Trägerschicht 36 außen mit einer Schicht Selbsthaftkleber 44 belegt ist. Die Schicht Selbsthaftkleber 44 ist mit einem silikonisierten Trennmaterial 46 abgedeckt. Sie dient zum Aufkleben des Laminats 28 oder eines Weiterverarbeitungsprodukts davon auf einen Träger.

Im Zuge der Weiterverarbeitung des Laminats 28 wird an einer Beschichtungsanlage auf die Außenseite der Trägerschicht 36 ein Selbsthaftkleber aufgetragen und die klebrige Oberfläche mit einem einseitig silikonisierten Trennmaterial 46 abgedeckt.

Fig. 5 zeigt ein Laminat 28 derselben Art, bei dem die Deckschicht 38 außen mit einer Schicht Selbsthaftkleber 44 belegt ist. Die Schicht Selbsthaftkleber 44 ist mit einem silikonisierten Trennmaterial 46 abgedeckt. Sie dient zum Aufkleben des Laminats 28 oder eines Weiterverarbeitungsprodukts davon auf einen Träger.

Im Zuge der Weiterverarbeitung des Laminats 28 wird an einer Beschichtungsanlage auf die Außenseite der Deckschicht 38 ein Selbsthaftkleber 44 aufgetragen und die klebrige Oberfläche mit einem einseitig silikonisierten Trennmaterial abgedeckt.

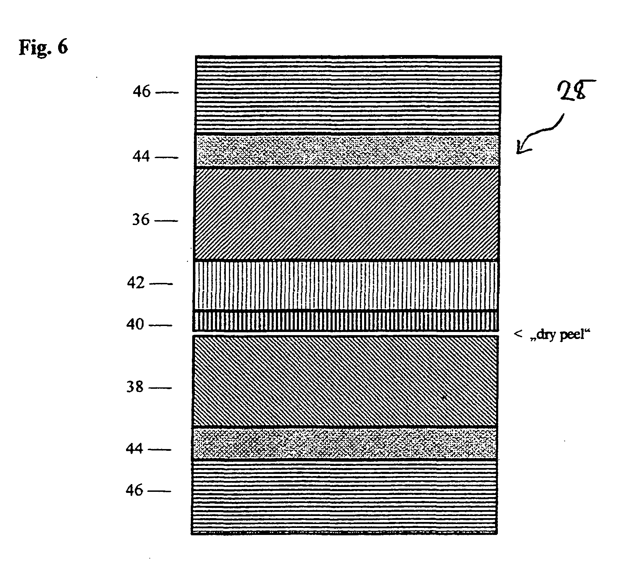

Fig. 6 zeigt ein Laminat 28 derselben Art, bei dem sowohl die Trägerschicht 36, als auch die Deckschicht 38 außen mit je einer Schicht Selbsthaftkleber 44 belegt ist. Die Schichten Selbsthaftkleber 44 sind mit je einem silikonisierten Trennmaterial 46 abgedeckt.

Die eine Schicht Selbsthaftkleber 44 dient wie vor zum Aufkleben des Laminats 28 oder eines Weiterverarbeitungsprodukts davon auf einen Träger. Die andere Schicht Selbsthaftkleber 44 kann als Kaschierkleber genutzt werden, um z. B. bedrucktes Material gegen das Laminat 28 oder ein Weiterverarbeitungsprodukt davon zu kaschieren.

Im Zuge der Weiterverarbeitung des Laminats 28 wird an einer Beschichtungsanlage sowohl auf die Außenseite der Trägerschicht 36, als auch auf die Außenseite der Deckschicht 38 Selbsthaftkleber 44 aufgetragen und mit einem einseitig silikonisierten Trennmaterial 46 abgedeckt. Die Selbsthaftkleber 44 der beiden Seiten können unterschiedliche Eigenschaften haben. Dasselbe gilt für die beiden Trennmaterialien 46.

Die Trägerschicht 36 kann aus Papier, kunststoffbeschichtetem Papier oder Kunststoff-Folie bestehen. Das Papier kann schwarz, weiß oder beliebig eingefärbt, und die Folie transparent sein.

Die Deckschicht 38 kann aus Spezialpapier, kunststoffbeschichtetem Papier oder Kunststoff-Folie bestehen. Die Folie kann klar-transparent, farbig-transluzent oder mit einem holographischen Bild und/oder mit einem "top coat" (Schutzlack, Druckprimer, Haftvermittler) versehen sein.

Als Selbsthaftkleber 44 kommen Dispersionen, Emulsionen oder Lösungen auf Basis Polyacrylat oder Kautschuk (Rubber) und Schmelzhaftklebstoffe (hotmelt) zum Einsatz. Die Kleber können thermisch, mit Elektronenstrahl oder mit ultravioletter Strahlung vernetzt sein. Den technologischen Eigenschaften nach können sie permanent klebend, abnehmbar (removeable) oder verschiebbar / positionierbar (repositionable) sein.

Bei dem Abdeckmaterial 46 handelt es sich um Releasematerial jeglicher Art, insbesondere silikonisiertes Trennpapier oder silikonisierte Trennfolie.

### Beispiel

Die Trägerschicht 36 besteht aus Papier. Die Deckschicht 38 besteht aus 60 µ dicker OPP-Folie (Folie aus orientiertem Polypropylen). Der Polydimethylsiloxananteil des modifizierten LD-Polyethylens 26 beträgt 0,15 bis 0,6 Gew.%. Die Schicht Extrusionskaschiermittel 40 ist von der Trägerschicht 36 nicht zerstörungsfrei ablösbar. Ihre Haftung gegen die Deckschicht 38 beträgt 2 bis 16 N/m im Schältest bei einem Abzugwinkel von 180° und einer Vorschubgeschwindigkeit von 300 mm/min.

## Patentansprüche

1. Durch Extrusionskaschieren hergestellte trennbare Schicht Kaschiermittel bestehend aus einer Mischung von mit Polydimethylsiloxan modifiziertem Polyethylen und beim Extrudieren als Schmelzfilm klebefähigem Polyolefin, wobei der Polydimethylsiloxananteil des Polyethylens 0,1 bis 3 Gew.% beträgt.

2. Schicht nach Anspruch 1, **dadurch gekennzeichnet, daß** das Polyethylen LD-Polyethylen (Low Density Polyethylene; Polyethylen geringer Dichte) ist.

3. Schicht nach Anspruch 1 oder 2, **dadurch gekennzeichnet, daß** das Polyethylen mit dem Polydimethylsiloxan gepfropft ist.

4. Schicht nach Anspruch 1 oder 2, **dadurch gekennzeichnet, daß** das Polyethylen mit dem Polydimethylsiloxan gemischt ist.

5. Schicht nach einem der Ansprüche 1 bis 4, **dadurch gekennzeichnet, daß** sie monoextrudiert ist.

6. Schicht nach einem der Ansprüche 1 bis 4, **dadurch gekennzeichnet, daß** sie mit Polyolefin, vorzugsweise LD-Polyethylen, coextrudiert ist.

7. Schichtstoff mit einer Trägerschicht und einer Deckschicht, die mit einer dazwischen extrudierten Schicht Kaschiermittel zusammenkaschiert sind, **dadurch gekennzeichnet, daß** das Extrusionskaschiermittel (40) aus einer Mischung von mit Polydimethylsiloxan modifiziertem Polyethylen und beim Extrudieren als Schmelzfilm klebefähigem Polyolefin besteht, wobei der Polydimethylsiloxananteil des Polyethylens 0,1 bis 3 Gew.% beträgt.

8. Schichtstoff nach Anspruch 7, **dadurch gekennzeichnet, daß** das Polyethylen LD-Polyethylen ist.

9. Schichtstoff nach Anspruch 7 oder 8, **dadurch gekennzeichnet, daß** das Polyethylen mit dem Polydimethylsiloxan gepfropft ist.

10. Schichtstoff nach Anspruch 7 oder 8, **dadurch gekennzeichnet, daß** das Polyethylen mit dem Polydimethylsiloxan gemischt ist.

11. Schichtstoff nach einem der Ansprüche 7 bis 10, **dadurch gekennzeichnet, daß** die Trägerschicht (36) aus Papier, insbesondere hochverdichtetem, glattem Papier, mit Kunststoff beschichtetem Papier oder Kunststoff-Folie besteht.

12. Schichtstoff nach einem der Ansprüche 7 bis 11, **dadurch gekennzeichnet, daß** die Deckschicht (38) aus oberflächenspaltfestem Spezialpapier oder mit Kunststoff beschichtetem Papier oder Kunststoff-Folie besteht.

13. Schichtstoff nach einem der Ansprüche 7 bis 12, **dadurch gekennzeichnet, daß** die Deckschicht aus unpolarer Kunststoff-Folie, insbesondere Polyolefin, besteht, und daß der Polydimethylsiloxananteil des Polyethylens gegen 0,1 Gew.% tendiert.

14. Schichtstoff nach einem der Ansprüche 7 bis 12, **dadurch gekennzeichnet, daß** die Deckschicht aus polarer Kunststoff-Folie, insbesondere Polyvinylchlorid (PVC), Polyethylenterephthalat (PET), Polycarbonat (PC), Polystyrol (PS) besteht, und daß der Polydimethylsiloxananteil des Polyethylens gegen 3 Gew.% tendiert.

15. Schichtstoff nach einem der Ansprüche 7 bis 14, **dadurch gekennzeichnet, daß** die Schicht Kaschiermittel (40) monoextrudiert ist.

16. Schichtstoff nach Anspruch 15, **dadurch gekennzeichnet, daß** das Monoextrudat Kaschiermittel (40) 10 bis 40 µm dick ist.

17. Schichtstoff nach einem der Ansprüche 7 bis 14, **dadurch gekennzeichnet, daß** die Schicht Kaschiermittel (40) mit Polyolefin, vorzugsweise LD-Polyethylen, coextrudiert ist.

18. Schichtstoff nach Anspruch 17, **dadurch gekennzeichnet, daß** bei dem Coextrudat das Polyolefin (42) 10 bis 30 µm und das Extrusionskaschiermittel (40) 1 bis 10 µm dick ist.

19. Schichtstoff nach Anspruch 17 oder 18, **dadurch gekennzeichnet, daß** das Extrusionskaschiermittel (40) der Deckschicht (38) zugewandt ist.

20. Schichtstoff nach einem der Ansprüche 7 bis 19, **dadurch gekennzeichnet, daß** die Trägerschicht (36) außen mit einer Schicht Selbsthaftkleber (44) belegt und die Schicht Selbsthaftkleber (44) mit einem silikonisierten Trennmaterial (46) abgedeckt ist.

21. Schichtstoff nach einem der Ansprüche 7 bis 20, **dadurch gekennzeichnet, daß** die Deckschicht (38) außen mit einer Schicht Selbsthaftkleber (44) belegt und die Schicht Selbsthaftkleber (44) mit einem silikonisierten Trennmaterial (46) abgedeckt ist.

22. Verfahren zur Herstellung des Schichtstoffs nach einem der Ansprüche 7 bis 21, **dadurch gekennzeichnet, daß** man Bahnen Trägermaterial (16) und Deckmaterial (20) von je einem Coil (14, 18) abwickelt, an einem Kühlzylinder (10) mit Anpreßwalze (12) zusammenführt, das Kaschiermittel dazwischen extrudiert und nach Umlaufen eines Teils des Kühlzylinderumfangs den Schichtstoff (28) davon wegführt und auf einen Coil (34) aufwickelt.

23. Verfahren nach Anspruch 22, **dadurch gekennzeichnet, daß** man eine Breitschlitz-Monoextrusion des Kaschiermittels durchführt.

24. Verfahren nach Anspruch 22, **dadurch gekennzeichnet, daß** man eine Breitschlitz-Coextrusion des Kaschiermittels zusammen mit Polyolefin, vorzugsweise LD-Polyethylen, durchführt.

## Claims

1. A separable layer of laminating medium produced by extrusion lamination, consisting of a mixture of polyethylene modified with polydimethyl siloxane and polyolefin which is adhesive upon being extruded as a melt film, wherein the proportion of polydimethyl siloxane in the polyethylene is 0.1 to 3 % by weight.

2. A layer according to Claim 1, **characterised in that** the polyethylene is low density (LD) polyethylene.

3. A layer according to Claim 1 or 2, **characterised in that** the polyethylene is grafted with the polydimethyl siloxane.

4. A layer according to Claim 1 or 2, **characterised in that** the polyethylene is mixed with the polydimethyl siloxane.

5. A layer according to any one of Claims 1 to 4, **characterised in that** it is monoextruded.

6. A layer according to any one of Claims 1 to 4, **characterised in that** it is co-extruded with polyethylene, preferably LD polyethylene.

7. A laminate with a backing layer and a surface layer, which are laminated together with a layer of
laminating medium extruded between them, **characterised in that** the extrusion laminating medium (40) consists of a mixture of polyethylene modified with polydimethyl siloxane and of polyolefin which is adhesive upon being extruded as a melt film, wherein the proportion of polydimethyl siloxane in the polyethylene is 0.1 to 3 % by weight.

8. A laminate according to Claim 7, **characterised in that** the polyethylene is LD polyethylene.

9. A laminate according to Claim 7 or 8, **characterised in that** the polyethylene is grafted with the polydimethyl siloxane.

10. A laminate according to Claim 7 or 8, **characterised in that** the polyethylene is mixed with the polydimethyl siloxane.

11. A laminate according to any one of Claims 7 to 10, **characterised in that** the backing layer (36) consists of paper, in particular highly compressed smooth paper, paper coated with plastics material or plastics film.

12. A laminate according to any one of Claims 7 to 11, **characterised in that** the surface layer (38) consists of special paper resistant to surface splitting or paper coated with plastics material or plastics film.

13. A laminate according to any one of Claims 7 to 12, **characterised in that** the surface layer consists of nonpolar plastics film, in particular polyolefin, and **in that** the proportion of polydimethyl siloxane in the polyethylene tends towards 0.1 % by weight.

14. A laminate according to any one of Claims 7 to 12, **characterised in** the surface layer consists of polar plastics film, in particular polyvinyl chloride (PVC), polyethylene terephthalate (PET), polycarbonate (PC), polystyrene (PS), and **in that** the proportion of polydimethyl siloxane in the polyethylene tends towards 3 % by weight.

15. A laminate according to any one of Claims 7 to 14, **characterised in** the layer of laminating medium (40) is monoextruded.

16. A laminate according to Claim 15, **characterised in that** the monoextrudate of laminating medium (40) is 10 to 40 µm thick.

17. A laminate according to any one of Claims 7 to 14, **characterised in** the layer of laminating
medium (40) is co-extruded with polyolefin, preferably LD polyethylene.

18. A laminate according to Claim 17, **characterised in** the co-extrudate the polyolefin (42) is 10 to 30 µm thick and the extrusion laminating medium (40) is 1 to 10 µm thick.

19. A laminate according to Claim 17 or 18, **characterised in** the extrusion laminating medium (40) faces the surface layer (38).

20. A laminate according to any one of Claims 7 to 19, **characterised in** the backing layer's (36) outside is coated with a layer of pressure-sensitive adhesive (44) and the layer of pressure-sensitive adhesive (44) is covered with siliconised separating material (46).

21. A laminate according to any one of Claims 7 to 20, **characterised in** the surface layer's (38) outside is coated with a layer of contact adhesive (44) and the layer of contact adhesive (44) is covered with siliconised separating material (46).

22. A method of producing the laminate according to any one of Claims 7 to 21, **characterised in that** webs of backing material (16) and covering material (20) are unwound from a respective reel (14,18), are brought together at a cooling cylinder (10) with a pressure roller, the laminating medium is extruded between them and after passing around part of the cooling cylinder's circumference the laminate is guided away therefrom and wound on to a reel (34).

23. A method according to Claim 22, **characterised in that** slot-die monoextrusion of the laminating medium is carried out.

24. A method according to Claim 22, **characterised in that** slot-die co-extrusion of the laminating medium together with polyolefin, preferably LD polyolefin, is carried out.

## Revendications

1. Couche débrochable préparée par extrusion-laminage se composant d'un mélange de polyéthylène modifié avec du polydiméthylsiloxane et d'une polyoléfine adhésive sous forme de film fondant extrudé, la proportion de polydiméthylsiloxane dans le polyéthylène étant comprise entre 0,1 et 3 % en poids.

2. Couche selon la revendication 1, **caractérisée en ce que** le polyéthylène est du polyéthylène LD (Low Density Polyethylene : polyéthylène à faible densité).

3. Couche selon la revendication 1 ou 2, **caractérisée en ce que** le polyéthylène est greffé avec le polydiméthylsiloxane.

4. Couche selon la revendication 1 ou 2, **caractérisée en ce que** le polyéthylène est mélangé avec le polydiméthylsiloxane

5. Couche selon l'une quelconque des revendications 1 à 4, **caractérisée en ce qu'**elle est monoextrudée.

6. Couche selon l'une quelconque des revendications 1 à 4, **caractérisée en ce qu'**elle est coextrudée avec une polyoléfine, de préférence le polyéthylène LD.

7. Produit laminé avec une couche support et une couche de revêtement qui sont laminées ensemble avec une couche débrochable extrudée située entre elles, **caractérisé en ce que** la couche débrochable extrudée (40) se compose d'un mélange de polyéthylène modifié avec du polydiméthylsiloxane et d'une polyoléfine adhésive sous forme de film fondant extrudé, la proportion de polydiméthylsiloxane dans le polyéthylène étant comprise entre 0,1 et 3 % en poids.

8. Produit laminé selon la revendication 7, **caractérisé en ce que** le polyéthylène est du polyéthylène LD.

9. Produit laminé selon la revendication 7 ou 8, **caractérisé en ce que** le polyéthylène est greffé avec le polydiméthylsiloxane.

10. Produit laminé selon la revendication 7 ou 8, **caractérisé en ce que** le polyéthylène est mélangé avec le polydiméthylsiloxane.

11. Produit laminé selon l'une quelconque des revendications 7 à 10, **caractérisée en ce que** la couche support (36) se compose de papier, en particulier de papier lisse hautement épaissi, de papier plastifié ou d'une feuille de plastique.

12. Produit laminé selon l'une quelconque des revendications 7 à 11, **caractérisée en ce que** la couche de revêtement (38) se compose de papier spécial dont la surface ne se fend pas ou de papier plastifié ou d'une feuille de plastique.

13. Produit laminé selon l'une quelconque des revendications 7 à 12, **caractérisé en ce que** la couche de revêtement se compose d'une feuille de plastique non polaire, en particulier d'une polyoléfine, et que la proportion de polydiméthylsiloxane dans le polyéthylène tend vers 0,1 % en poids.

14. Produit laminé selon l'une quelconque des revendications 7 à 12, **caractérisé en ce que** la couche de revêtement se compose d'une feuille de plastique polaire, en particulier de chlorure de polyvinyle (PVC), de térephtalate de polyéthylène (PET), de polycarbonate (PC), de polystyrène (PS), et que la proportion de polydiméthylsiloxane dans le polyéthylène tend vers 3 % en poids.

15. Produit laminé selon l'une quelconque des revendications 7 à 14, **caractérisé en ce que** la couche débrochable (40) est monoextrudée.

16. Produit laminé selon ia revendication 15, **caractérisé en ce que** la couche débrochable monoextrudée (40) est épaisse de 10 à 40 µm.

17. Produit laminé selon l'une quelconque des revendications 7 à 14, **caractérisé en ce que** la couche débrochable (40) est coextrudée avec une polyoléfine, de préférence le polyéthylène LD.

18. Produit laminé selon la revendication 17, **caractérisé en ce que** la polyoléfine coextrudée (42) est épaisse de 10 à 30 µm et la couche débrochable coextrudée (40) est épaisse de 1 à 10 µm.

19. Produit laminé selon la revendication 17 ou 18, **caractérisé en ce que** la couche débrochable extrudée (40) est tournée vers la couche de revêtement (38).

20. Produit laminé selon l'une quelconque des revendications 7 à 19, **caractérisé en ce que** la couche support (36) est revêtue à l'extérieur avec une couche d'auto-adhésif (44) et que la couche d'auto-adhésif (44) est recouverte d'un matériau de séparation siliconé (46).

21. Produit laminé selon l'une quelconque des revendications 7 à 20, **caractérisé en ce que** la couche de revêtement (38) est revêtue à l'extérieur d'une couche d'auto-adhésif (44) et la couche d'auto-adhésif (44) est recouverte d'un matériau de séparation siliconé (46).

22. Procédé de préparation du produit laminé selon l'une quelconque des revendications 7 à 21, **caractérisé en ce qu'**on dévide les longueurs de matériau support (16) et de matériau de revêtement (20) chacun d'une bobine (14, 18), on les conduit ensemble à un cylindre de refroidissement (10) avec un rouleau compresseur (12), on extrude la couche débrochable entre eux et on en éloigne le produit laminé (28) après le déroulement d'une partie de la rotation du cylindre de refroidissement et on l'enroule sur une bobine (34).

23. Procédé selon la revendication 22, **caractérisé en ce que** l'on réalise une monoextrusion à fente large de la couche débrochable.

24. Procédé selon la revendication 22, **caractérisé en ce que** l'on réalise une coextrusion à fente large de la couche débrochable conjointement avec une polyoléfine, de préférence le polyéthylène LD.
